# EUROPÄISCHE PATENTANMELDUNG

(11) **EP 1 416 201 A1**
(43) Veröffentlichungstag der Anmeldung: **06.05.2004**
(21) Anmeldenummer: 02024400.0
(22) Anmeldetag: 04.11.2002
(51) Int. Cl.: F16J 15/00, F01D 25/18

(54) **Dichtungssystem sowie Verfahren zum Betrieb eines Dichtungssystems**

(71) Anmelder: SIEMENS AKTIENGESELLSCHAFT, 80333 München (DE)
(72) Erfinder: Klaar, Juergen, 47506 Neukirchen-Vluyn (DE)

(57) **Zusammenfassung**

Die Erfindung betrifft ein Dichtungssystem, insbesondere für wasserstoffgekühlte Turbogeneratoren sowie ein Verfahren zum Betrieb eines solchen Dichtungssystems. Um Störungen im Dichtungssystem frühzeitig zu erkennen wird ein Dichtungssystem vorgeschlagen, das wenigstens einen Sensor zur Erfassung von Messgrößen aufweist, die Rückschlüsse auf die Dichtigkeit des Dichtungssystems ermöglichen.

## Beschreibung

Die Erfindung betrifft ein Dichtungssystem, insbesondere für wasserstoffgekühlte Turbogeneratoren sowie ein Verfahren zum Betrieb eines solchen Dichtungssystems.

Wasserstoffgekühlte Turbogeneratoren benötigen zur Abdichtung zwischen rotierender Läuferwelle und Ständergehäuse ein ölgeschmiertes Dichtungssystem, welches das Austreten von Wasserstoff aus dem Gehäuse verhindert. Die Anforderungen an derartige Wellendichtungen steigen infolge der Leistungssteigerung der schnell laufenden Turbogeneratoren ständig. Den einwandfreien Betrieb der Wellendichtungen erschweren u.a. immer größere Wellendurchmesser, schwerere Dichtringe, längere Läuferwellen und damit verbunden stärkere Wellenbewegungen am Dichtring sowie höhere Gasdrücke in den Maschinengehäusen. Die Dicke des Ölfilms schwankt dabei in Abhängigkeit verschiedener Randbedingungen. So erwärmen sich beispielsweise große und schwere Dichtringe über ihren Umfang unterschiedlich stark, was eine elliptische Verformung des Dichtringes zur Folge hat. Dies wiederum hat Einfluss auf die Breite des Ölfilms zwischen Welle und Dichtring. Weitere Ursachen für eine Bewegung des Dichtringes bzw. des Dichtringhalters sind u.a. Wellenschwingungen der umlaufenden Welle, Gehäuseschwingungen des Generators und thermische Einflüsse, die auf unterschiedliche Ursachen zurückgeführt werden können. Das Dichtungssystem kann während des Betriebes so weit gestört werden, dass der Dichtring beschädigt oder zerstört wird. Im Extremfall wird die Dichtfunktion so weit gestört, dass Wasserstoff austritt und der Generator abgeschaltet werden muss.

Störungen im Dichtringsystem bleiben bisher während des Betriebes unerkannt. Beschädigungen werden erst bei Revisionsarbeiten entdeckt. Dabei bleiben Ursache und Zeitpunkt der Beschädigung häufig wegen fehlender Überwachungssysteme unerkannt.

Der Erfindung liegt die Aufgabe zugrunde, Störungen im Dichtungssystem frühzeitig zu erkennen. Diese Aufgabe wird durch ein Dichtungssystem nach Anspruch 1 bzw. durch ein Verfahren nach Anspruch 26 gelöst.

Das erfindungsgemäße Dichtungssystem weist eine Wellendichtung auf, die die Läuferwelle umschließt. Zwischen dem Dichtring der Wellendichtung und der Welle und/oder zwischen dem Dichtring und einem entsprechendem Dichtringhalter ist ein Dichtmittel, vorzugsweise Öl, eingebracht. Das Dichtungssystem weist wenigstens einen Sensor zur Erfassung von Messgrößen auf, die Rückschlüsse auf die Dichtigkeit des Dichtungssystems ermöglichen.

Der Erfindung liegt die Idee zugrunde, Störungen im Dichtungssystem bereits frühzeitig durch den Einsatz unterschiedlichster Sensorik zu erfassen. Damit können Störungen des Dichtungssystems sowie ihre Ursachen erfasst und überwacht werden. Die durch die Sensoren ermittelten Messwerte können gespeichert und zur Identifizierung zukünftiger Störungen verwendet werden. Darüber hinaus werden Störungen frühzeitig erkannt, so dass weitere Beschädigungen am Dichtungssystem, beispielsweise durch den Austausch defekter Teile verhindert werden können.

In einer besonders vorteilhaften Ausführungsform der Erfindung ist vorgesehen, auf Grundlage der Messwerte eine Regelung der Dichtmittelzufuhr vorzunehmen. Diese erfolgt dabei vorteilhafterweise gezielt an den Stellen des Dichtungssystems, an denen der Dichtmittelfilm eine kritische Stärke unterschreitet.

Die Erfindung sowie weitere vorteilhafte Ausgestaltungen der Erfindung gemäß Merkmalen der Unteransprüche werden im folgenden anhand schematisch dargestellter Ausführungsbeispiele näher erläutert. Hierbei zeigen:
- FIG 1: einen Querschnitt durch ein Generatorgehäuse,
- FIG 2: einen Längsschnitt durch das Generatorgehäuse.
- FIG 3: eine vereinfachte Darstellung des Dichtringes mit Öleintrittsbohrungen,
- FIG 4: eine schematische Darstellung des Regelsystems des Ölkreislaufes.

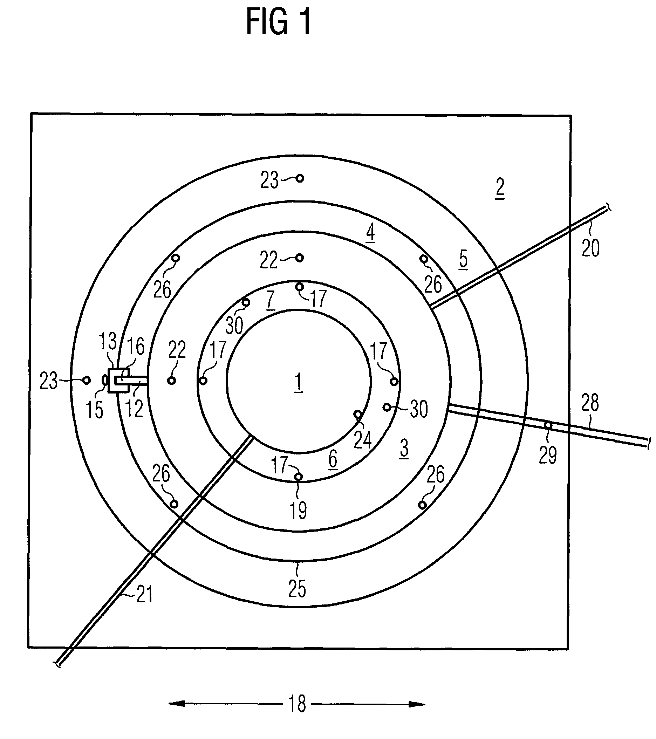

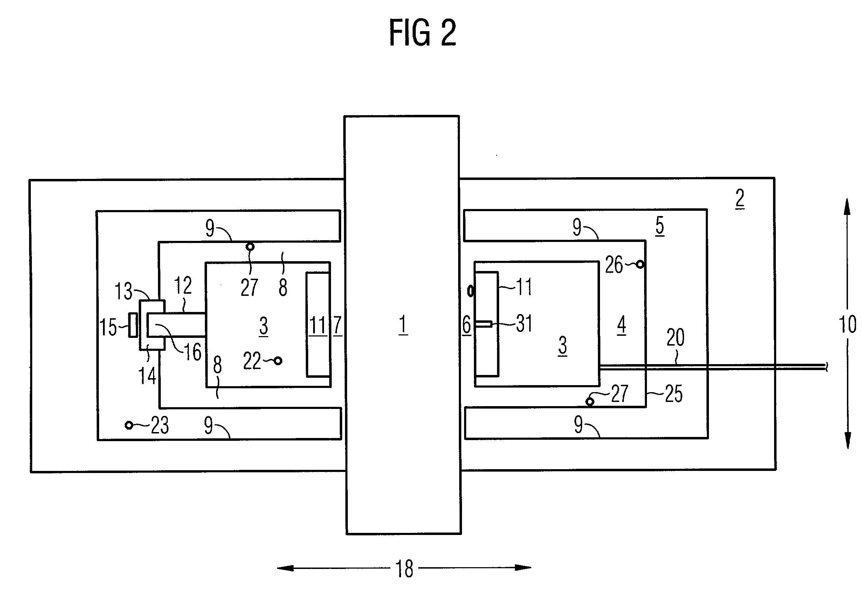

Wie in FIG 1 und FIG 2 dargestellt, verläuft die Läuferwelle 1 im Ständergehäuse 2, wobei sie von einem Dichtring 3 umgeben ist. Der Dichtring 3 ist in einer Kammer 4 des Dichtringhalters 5 angeordnet. Die eigentliche Abdichtung erfolgt dabei mit Öl 6, das in die Spalte 7 zwischen Dichtring 3 und Welle 1 (radialer Ölfilm) bzw. in die Spalte 8 zwischen Dichtring 3 und den Kammerwänden 9 des Dichtringhalters 5 (axialer Ölfilm) gedrückt wird. Das Dichtungssystem umfasst außerdem einen äußeren Ölkreislauf (nicht dargestellt) mit Pumpen, Filtern, Kühler sowie Behälter, Rohrleitungen und Ventilen.

Das Dichtungssystem ist derart ausgebildet, dass der Dichtring 3 durch den sich ausbildenden Ölfilm auf der Welle 1 schwimmt. Dabei ist die Dicke des Ölfilms in Abhängigkeit von den verschiedenen Umgebungsparametern über den Umfang unterschiedlich ausgebildet. Insbesondere kann es durch einen unregelmäßigen Ölfilm auch zu Bewegungen des Dichtringes 3 in axialer Richtung 10 kommen, da der Dichtring 3 im Dichtringhalter 5 auch in diese Richtung durch entsprechende Ölfilme gehalten wird.

Dichtring 3 und Dichtringhalter 5 sind aus Montagegründen geteilt ausgeführt. Der Dichtring 3 ist an seinen inneren Gleitflächen mit einem Weißmetallausguss 11 versehen. Der Innendurchmesser des Weißmetallausgusses 11 ist dabei nur wenig größer als der Wellendurchmesser.

Am Dichtring 3 ist ein Verdrehzapfen oder -bolzen 12 befestigt, der in eine Ausnehmung 13 des Dichtringhalters 5 ragt. Dadurch wird eine tangentiale Drehung des Dichtringes 3 nur im begrenzten Maße zugelassen, so dass sich der Dichtring 3 bei der Rotation der welle 1 nicht mitdrehen kann. Die Aufnahmeausnehmung 13 ist nach Art einer durch Wände 14 begrenzten Aufnahmekammer ausgebildet.

Beschädigungen des Dichtungssystem treten zumeist am Dichtring 3, nämlich an der Weißmetallschicht 11 in Form von Abrieb, Rissen und Ausbrüchen auf. Aber auch am Verdrehzapfen 12 und an der Kammerwand 14 kann Hämmern zu Materialabtragungen, Verformungen oder sogar zum Bruch des Verdrehzapfens 12 führen.

Störungen im Dichtungssystem können die auf den Dichtring 3 in Umfangsrichtung wirkenden Reibungskräfte verändern, was zu einer geringen Lageveränderung des Verdrehzapfens 12 führt. Da die Tangentialbewegung des Verdrehzapfens 12 durch die Wände 14 der Aufnahmeausnehmung 13 im Dichtringhalter 5 verhindert wird, treten sowohl am Verdrehelement 12 als auch an der Kammerwand 14 Kräfte auf. Da sich die Reibungskräfte in kurzer Zeit verändern können, kann es auch zum Schwingen des Dichtrings 3 kommen.

Zur Erfassung von auf den Verdrehzapfen 12 wirkenden Kräften ist daher im Dichtringhalter 5 ein Drucksensor 15 vorgesehen. Der Sensor 15 bildet dabei eine Wand der Aufnahmeausnehmung 13, im vorliegenden Ausführungsbeispiel ist dies die wellenabgewandte Stirnwand der Aufnahmeausnehmung. Mit anderen Worten misst der Sensor 15 den dynamischen Druck, den der Verdrehbolzen 12 auf die Kammerwand 14 ausübt. Zum Schutz vor den stetigen Bewegungen des Verdrehelements 12 umfasst die Messfläche des Sensors 15 eine leicht auswechselbare Metallplatte, so dass bei einer Beschädigung lediglich diese Platte ausgetauscht werden muss.

Zur Messung der Kraftkomponente, die das Verdrehelement 12 in Umfangsrichtung auf die Kammerwände 14 ausübt, weist der Drehbolzen 12 einen oder mehrere Sensoren 16 mit Dehnungsmessstreifen (DMS) auf.

Das Dichtungssystem weist darüber hinaus eine Anzahl von Abstandssensoren 17 zur Erfassung des Abstandes zwischen Welle und Dichtring in radialer Richtung 18 auf. Die Abstandssensoren 17 dienen gleichzeitig zur direkten Messung der Dicke des Ölfilms zwischen Welle 1 und Dichtring 3. Sie sind daher am Innenumfang 19 des Dichtrings 3 angeordnet. Für eine ausreichende Anzahl von Messdaten sind dabei vorzugsweise mindestens acht gleichmäßig angeordnete Sensoren 17 vorgesehen.

Der Abstand zwischen Welle 1 und Dichtring 3 kann zusätzlich über eine Widerstandsmessung ermittelt werden. Ist ein ausreichender Ölfilm zwischen Welle 1 und Dichtring 3 über die gesamte Grenzfläche am Umfang vorhanden, dann bildet das Dichtöl 6 eine ausreichende elektrische Isolierung zwischen Welle 1 und Dichtring 3. Eine Störung dieser Isolierung, beispielsweise beim Anstreifen des Dichtringes 3 auf der Welle 1, kann dann durch Widerstandsmessungen erfasst werden. Hierzu wird von außen zwischen Welle 1 und Dichtring 3 eine Messspannung zur Messung des Isolationswiderstandes des Ölfilms angelegt. Um den Strom bei metallischer Berührung zwischen Welle 1 und Dichtring 3 möglichst gering zu halten, beispielsweise unter 100 mA, sind Begrenzungswiderstände bzw. eine Strombegrenzung im Messkreis vorgesehen. Zur Messung wird eine niedrige Gleichspannung angelegt, so dass ein Durchschlagen des Ölfilms infolge eines zu hohen Potentialunterschiedes nicht möglich ist.

Um Störungen des Messsystems durch eine unzureichende Isolierung des Dichtringhalters 5 oder dessen metallische Berührung über Dichtschneiden mit der Welle 1 auszuschließen, ist der Verdrehbolzen 12 zum Dichtring 3 oder zum Dichtringhalter 5 elektrisch isoliert. Für eine kontinuierliche Überwachung ist eine erste Messleitung 20 direkt am Dichtring angebracht. Der zweite Messleitungsanschluss erfolgt dann über die Läufererdungsbürste 21.

Beim Betrieb des Generators entstehen so genannte Wellenspannungen, die auf der Turbinenseite durch die Läufererdungsbürste 21 auf Erdpotential gelegt werden. Mit anderen Worten weisen die turbinenseitige Welle und der turbinenseitige Dichtring praktisch ein gleiches Spannungspotential auf. Auf der Erregerseite hingegen kann der Dichtring aufgrund seines Anstreifens das Wellenspannungspotential annehmen, was zur Folge hat, dass ein Strom über die Messleitung, die Stromversorgung der Isolationsmesseinrichtung und die Läufererdung fließt. Um den Strom zu begrenzen, beispielsweise auf einen Wert kleiner als 100 mA, werden daher entsprechende Maßnahmen im Messkreis vorgenommen. Insbesondere werden auch Wellenspannungen anderer Art in der Messschaltung berücksichtigt, da die Wellenspannung - wenn allein die erregerseitige Wellenspannung als treibende Spannung genutzt wird - erst bei erregtem Generator vorhanden ist.

Über die gleichen Messanschlüsse 20, 21 wie zur Messung des Isolationswiderstandes des Ölfilms wird auch der kapazitive Widerstand zwischen Welle 1 und Dichtring 3 gemessen. Dabei weisen Änderungen des Widerstandes auf eine Veränderung des Ölfilms hin. Beim Aufbau aller Messkreise sind die Sensoren isoliert in den Bauteilen der Wellendichtung installiert. Besonders sicher ist es, wenn die sekundären Messkreise von den primären Messkreisen (Sensor und Messleitung) galvanisch getrennt sind.

Störungen im Dichtölfilm können den Dichtring 3 zu Schwingungen anregen, die mit im Dichtring 3 angeordneten Beschleunigungssensoren 22 registriert werden. Darüber hinaus werden Relativschwingungen zwischen Dichtringhalter 5 und Welle 1 mit berührungslos messenden Beschleunigungssensoren 23 erfasst, die im Dichtringhalter 5 angeordnet sind. Dadurch werden Wellenschwingungen erkannt, die ebenfalls Ursache für Störungen des Dichtungssystems sind. Um die Bahnbewegung der Wellenschwingung zu ermitteln, werden zwei Sensoren 22 bzw. 23 in Umfangsrichtung um 90° versetzt zueinander angeordnet. Zur Bestimmung der Winkellage und zur Synchronisation der Sensoren mit anderen Sensoren im Dichtungssystem wird das Signal eines Wellenpositionsgebers 24 verwendet. Die gemessenen Werte werden mit einem Wellenimpuls synchronisiert und in Bezug zur Wellenschwingung, die in der Nähe der Wellendichtung erfasst wird, gebracht. Aus den vorliegenden Daten wird in einer entsprechenden Auswerteeinheit ein Zusammenhang zwischen Wellenschwingung, Verformung des Dichtringes, Ringpendelungen, Anstreifen des Dichtringes an der Welle usw. ermittelt. Die Daten werden für eine Schadensanalyse oder zur Verwendung in einem Diagnosesystem gespeichert. Das Dichtungssystem kann auch mit Meldern versehen sein, die bei Überschreiten definierter Grenzwerte eine Störungsmeldung absetzen.

Neben den bereits erwähnten Sensoren sind weitere Sensoren vorgesehen, deren Messsignale ebenfalls der weiteren Signalverarbeitung zugeführt werden. Insbesondere sind weiterhin Sensoren zur Erfassung der Position des Dichtrings gegenüber dem Dichtringhalter vorgesehen.

So sind am Innenumfang 25 des Dichtringhalters 5 gleichmäßig verteilte Abstandssensoren 26 angeordnet, die die Position des Dichtrings 3 in radialer Richtung 18 zum Dichtringhalter 5 und eine mögliche elliptische Verformung des Dichtrings 3 erfassen. Vorteilhafterweise werden für eine ausreichende Auswertung wenigstens acht dieser Abstandssensoren 26 verwendet.

Um die Position des Dichtrings 3 in axialer Richtung 10 zum Dichtringhalter 5 zu überwachen, sind darüber hinaus vier gleichmäßig am Umfang positionierte Abstandssensoren 27 eingesetzt. Mit diesen Sensoren 27 werden die Spalte 8 zwischen Dichtring 3 und den Kammerwänden 9 des Dichtringhalters 5 und ein eventuelles Schrägstellen des Dichtringes 3 überwacht.

In jeder Ölzulaufleitung 28 des Dichtmittelversorgungssystems, vorzugsweise unmittelbar am Eintritt in den Dichtringhalter 5, sind dynamisch messende Drucksensoren 29 angebracht. Diese registrieren Druckschwankungen im Ölzulauf, die sich aufgrund von zum Teil sprungartigen Änderungen der Ölfilmdicke ergeben.

Über den Umfang 19 des Dichtrings 3 verteilt sind darüber hinaus mehrere Temperatursensoren 30 angeordnet. Diese dienen der Messung der Öltemperatur in unmittelbarer Nähe der Lauffläche 11 auf der Innenseite des Dichtringes 3. Im Gegensatz zu der bisher üblichen Messung der Öltemperatur im ablaufenden Öl können dabei örtliche überhöhte Erwärmungen schneller erfasst werden.

Da sich der ohmsche Widerstand am Dichtring 3 im Bereich des Weißmetallausgusses 11 bei entsprechender Materialwahl des Tragrings von dem des äußeren Tragrings unterscheidet, können Ausbrechungen und größere Risse im Weißmetallausguss 11 über eine präzise Widerstandsmessung erfasst werden. Zu diesem Zweck sind Messstifte 31 in den Weißmetallausguss 11 eingegossen. Die Messstifte 31 sind dabei zum Tragring isoliert. Da für eine bessere Montage Dichtring 3 und Dichtringhalter 5 geteilt ausgeführt sind, ist es erforderlich, um eine gute Kontaktierung des Weißmetallausgusses 11 über die Trennfugen zwischen den beiden Dichtringhälften zu erhalten, zur Überbrückung der Trennfuge niederohmige Kontaktverbindungen einzusetzen. Äußere Messleitungswiderstände und unterschiedliche Dichtringtemperaturen werden in der Messung berücksichtigt.

Alle verwendeten Sensoren sind vorzugsweise sowohl für statische als auch für dynamische Messungen ausgebildet. Sämtliche Messsignale werden der rechnergestützten Auswerteeinheit zugeführt und dort unter Verwendung eines Rechnerprogramms verarbeitet.

Aus der Relativbewegung des Dichtringhalters 5 zur Welle 1 sowie der radialen Relativbewegung des Dichtringhalters 5 zum Dichtring 3 wird die Dicke des Ölfilms zwischen Dichtring 3 und Welle 1 während einer Umdrehung ermittelt. Ursache für einen zu geringen Ölfilm können beispielsweise zu hohe Wellenschwingungen'sein, die z.B. beim Durchfahren einer kritischen Drehzahl des Wellenstrangs oder durch Veränderung des Laufverhaltens beim Lastbetrieb auftreten können. Aus der Überwachung und der Auswertung der Relativbewegung des Dichtringhalters 5 zur Welle 1 werde Erkenntnisse zum Nachwuchten gezogen. Aus den Messungen der Relativbewegung des Dichtringhalters 5 zum Dichtring 3 werden die Ölfilmdicke, eine Verformung des Dichtrings 3 und seine Lage ermittelt. In diesem Fall werden, wie weiter unten beschrieben, regeltechnische Maßnahmen eingeleitet.

Die direkte Messung der Ölfilmdicke und die Temperatur am Dichtring 3 dienen als allgemeine Überwachungskriterien. Werden die zulässigen Werte überschritten, können Revisionsmaßnahmen eingeleitet werden. Werden am Dichtringhalter 5 erhöhte Drücke gemessen oder treten starke Druckschwankungen auf, die vom Verdrehbolzen 12 übertragen werden, kann eine Störung im Dichtungssystem vorliegen, der ebenfalls durch regelungstechnische Maßnahmen begegnet werden kann. Wird der Drucksensor 15 in der Aufnahmeausnehmung 13 über längere Zeit stark beansprucht, ist bei eine Revision ein Austausch der Metallplatte erforderlich.

Über die Messung der radialen Relativbewegung des Dichtringhalters 5 zum Dichtring 3 sowie des Isolationswiderstandes zwischen Dichtring 3 und Welle 1 wird die Erfassung von metallischen Kontakten zwischen Welle 1 und Dichtring 3 möglich. Darüber hinaus kann die genaue Position des Kontaktes am Umfang der Welle 1 sowie eine mögliche Ursache des Kontaktes angegeben werden. Berühren sich Welle 1 und Dichtring 3, kann dagegen mit regeltechnischen Maßnahmen vorgegangen werden. Werden Häufigkeit und Dauer der Störungen registriert, so können diese Informationen für die spätere Überwachung sowie die Revisionsplanungen verwendet werden. Gleiches gilt, wenn eine Veränderung des Widerstandes im Weißmetall 11 festgestellt wird, was darauf hindeutet, dass der Dichtring 3 beschädigt ist. Die oben genannten Beispiele zeigen nur exemplarisch, welche Möglichkeiten sich aus der Kombination der verschiedenen Messsignale für die Überwachung, Erfassung, Auswertung und Verwendung der Signale ergeben. Neben den beschriebenen Sensoren können selbstverständlich auch weitere Messgeber unterschiedlichster Art eingesetzt werden, um den jeweiligen Anwendungsfällen gerecht zu werden.

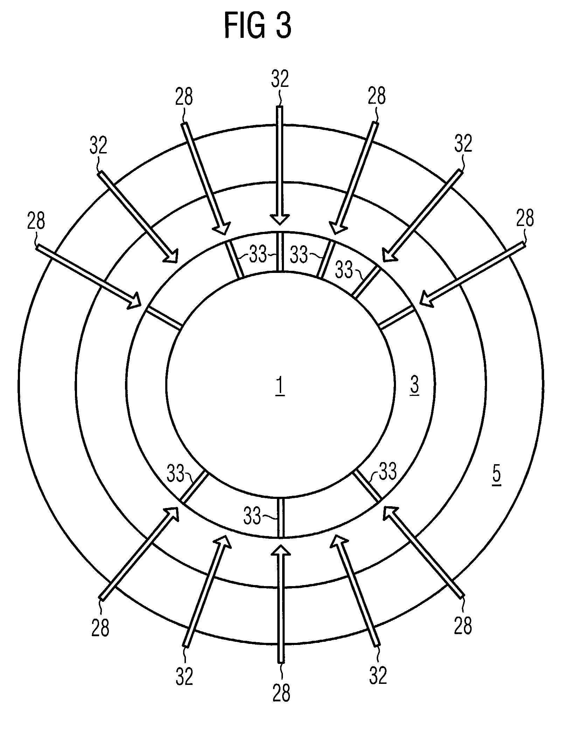

Für regelungstechnische Eingriffe sind zu den bereits vorhandenen Standardöleintritten 28 mindestens sechs zusätzliche Öleintritte 32 im Dichtringhalter 5 angeordnet. Eine derartige Anordnung ist in FIG 3 abgebildet. Die Zusatzeintritte 32 sind in Abhängigkeit von der Drehrichtung der Welle 1 und dem Bereich mit kleineren Ölfilmdicken unsymmetrisch positioniert. In Abhängigkeit von der räumlichen Lage einer Störung wird über die Öleintritte 28, 32 zusätzliches Dichtöl in die Radialbohrungen 33 des Dichtrings 3 gedrückt. Dies ist vorteilhafterweise immer dann der Fall, wenn der Ölfilm zu dünn oder überhaupt nicht mehr vorhanden ist. Für eine gezieltere Zuführung des zusätzlichen Dichtöls sind die Bohrungen im Dichtringhalter 5 mit Verlängerungsrohren versehen, die wenig oberhalb der Eintrittsbohrungen des Dichtrings 3 enden.

Durch das Einbringen des zusätzlichen Dichtöls wird der fehlende Ölfilm wieder aufgebaut. Ist der Dichtring 3 über den Umfang, beispielsweise durch ungleichmäßige Wärmeabfuhr, elliptisch verformt, bildet sich in der kleineren Durchmesserachse der Ellipse ein dünnerer Ölfilm aus. Eine zusätzliche Ölmenge führt in diesem Bereich die Wärme besser ab, so dass die Dichtringverformung zurückgeht und der Ölfilm wieder zunimmt.

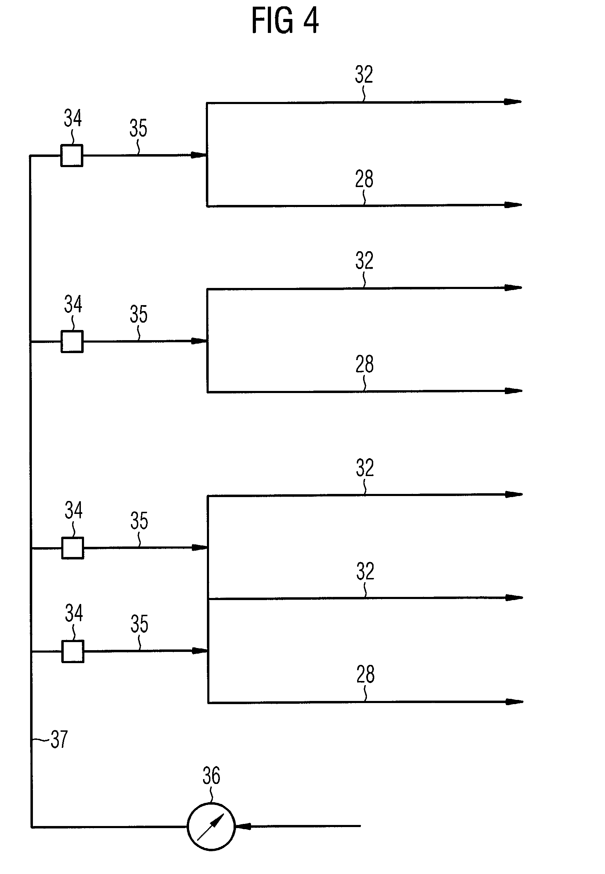

Wie in FIG 4 dargestellt, werden die Zusatzölmengen entsprechend des Regelverhaltens beispielsweise bei einer Zweipunktregelung nur zeitlich begrenzt zugeführt. Die Steuerung kann durch Magnetventile 34 in den Zulaufleitungen 35 oder auch durch Stellventile erfolgen. Welche Ventile für wie lange betätigt werden wird über einen programmierbaren Reglerbaustein 36 gesteuert. Im Reglerbaustein 36 werden unter Verwendung der Messgrößen die entsprechenden Stellorgane betätigt.

Zur Vereinfachung des Regelsystems können die Zusatzrohrleitungen 35 auf mehrere Öleintritte 28, 32 gemeinsam geschaltet werden. Das zusätzliche Dichtöl wird aus der Dichtölanlage über die Rohrleitung 37 den Ventilen 34 zugeführt. Vorteilhafterweise liegt der Öldruck in dieser Leitung etwas über dem Öldruck der Standardölversorgung.

Wird das Zusatzöl über einen separaten Kühler geleitet, dann kann der Regelkreis den Einfluss des kälteren Zusatzöls bei der Störungsbehebung berücksichtigen.

Entsprechend diesem Regelungsverfahren können auch Störungen im axialen Ölfilm zwischen Dichtring 3 und Dichtringhalter 5 ausgeglichen werden.

### Bezugszeichenliste

- 1: Läuferwelle
- 2: Ständergehäuse
- 3: Dichtring
- 4: Kammer
- 5: Dichtringhalter
- 6: Dichtöl
- 7: radiale Spalte
- 8: axiale Spalte
- 9: Kammerwand
- 10: axiale Dichtung
- 11: Weißmetallausguss
- 12: Verdrehbolzen
- 13: Aufnahmeausnehmung
- 14: Wand
- 15: Drucksensor
- 16: Sensor mit DMS
- 17: Abstandssensor
- 18: radiale Richtung
- 19: Innenumfang des Dichtrings
- 20: Messleitung
- 21: Läufererdungsbürste
- 22: Beschleunigungssensor
- 23: Beschleunigungssensor
- 24: Wellenpositionsgeber
- 25: Innenumfang des Dichtringhalters
- 26: Abstandssensor
- 27: Abstandssensor
- 28: Ölzulauf
- 29: Drucksensor
- 30: Temperatursensor
- 31: Messstift
- 32: Zusatzöleintritt
- 33: Radialbohrung
- 34: Magnetventil
- 35: Zulaufleitung
- 36: Reglerbaustein
- 37: Rohrleitung

## Patentansprüche

1. Dichtungssystem, insbesondere für wasserstoffgekühlte Turbogeneratoren, mit einer die Läuferwelle (1) umschließenden, einen Dichtring (3) aufweisenden Wellendichtung und einem Dichtmittel (6),
**dadurch gekennzeichnet, dass** die Wellendichtung wenigstens einen Sensor zur Erfassung einer Messgröße aufweist, die Rückschlüsse auf die Dichtigkeit des Dichtungssystems ermöglicht.

2. Dichtungssystem nach Anspruch 1,
**gekennzeichnet durch**
- einen den Dichtring (3) haltenden Dichtringhalter (5),
- ein am Dichtring (3)angebrachtes, in eine Aufnahmeausnehmung (13) des Dichtringhalters (5) ragendes Verdrehelement (12),
- wenigstens einen Sensor zur Erfassung von auf das Verdrehelement (12) und/oder die Aufnahmeausnehmung (13) wirkenden Kräften.

3. Dichtungssystem nach Anspruch 2,
**dadurch gekennzeichnet, dass**
der Sensor ein Drucksensor (15) ist.

4. Dichtungssystem nach Anspruch 2 oder 3,
**dadurch gekennzeichnet, dass**
der Sensor eine Wand (14) der Aufnahmeausnehmung (13) bildet.

5. Dichtungssystem nach einem der Ansprüche 2 bis 4,
**dadurch gekennzeichnet, dass**
das Verdrehelement (12) wenigstens einen Sensor (16) zur Erfassung der vom Verdrehelement (12) in Umfangsrichtung auf die Kammerwand ausübenden Kräfte aufweist.

6. Dichtungssystem nach Anspruch 5,
**dadurch gekennzeichnet, dass**
der Sensor (16) einen Dehnungsmessstreifen umfasst.

7. Dichtungssystem nach einem der Ansprüche 1 bis 6,
**gekennzeichnet durch** einen Abstandssensor (17) zur direkten Erfassung des radialen Abstandes zwischen Welle (1) und Dichtring (3).

8. Dichtungssystem nach einem der Ansprüche 1 bis 7,
**gekennzeichnet durch**
einen Sensor zur Erfassung des Isolationswiderstandes des Dichtmittels (6).

9. Dichtungssystem nach einem der Ansprüche 1 bis 8,
**gekennzeichnet durch**
einen Sensor zur Erfassung des kapazitiven Widerstandes des Dichtmittels (6).

10. Dichtungssystem nach Anspruch 8 oder 9,
**gekennzeichnet durch**
einen direkt am Dichtring (3) angebrachten ersten Messleitungsanschluss (20).

11. Dichtungssystem nach Anspruch 10,
**dadurch gekennzeichnet, dass**
der zweite Messleitungsanschluss über die Läufererdungsbürste (21) erfolgt.

12. Dichtungssystem nach einem der Ansprüche 1 bis 11,
**gekennzeichnet durch**
vorzugsweise gleichmäßig am Umfang des Dichtrings (3) angeordnete Abstandssensoren (26, 27) zur Erfassung der Position des Dichtrings (3) in radialer und/oder axialer Richtung zum Dichtringhalter (5).

13. Dichtungssystem nach einem der Ansprüche 1 bis 12,
**gekennzeichnet durch**
am Dichtring (3) angeordnete Beschleunigungssensoren (22) zur Erfassung von Schwingungen des Dichtringes (3).

14. Dichtungssystem nach einem der Ansprüche 1 bis 13,
**gekennzeichnet durch**
am Dichtringhalter (5) angeordnete, vorzugsweise berührungslos messende Sensoren (23) zur Erfassung von Relativbewegungen zwischen Dichtringhalter (5) und Welle (1).

15. Dichtungssystem nach Anspruch 14,
**dadurch gekennzeichnet, dass** wenigstens zwei Sensoren (23) in Umfangsrichtung um 90° versetzt zueinander angeordnet sind.

16. Dichtungssystem nach einem der Ansprüche 1 bis 15,
**gekennzeichnet durch**
einen Drucksensor (29) zur Erfassung von Druckschwankungen im Dichtmittelzulauf (28).

17. Dichtungssystem nach Anspruch 16,
**dadurch gekennzeichnet, dass**
ein Drucksensor (29) in jeder Dichtmittelzulaufleitung (28), vorzugsweise unmittelbar am Eintritt in den Dichtringhalter (5) angeordnet ist.

18. Dichtungssystem nach einem der Ansprüche 1 bis 17,
**gekennzeichnet durch**
wenigstens einen Sensor (30) zum Erfassen der Temperatur auf der Innenseite (19) des Dichtrings (3).

19. Dichtungssystem nach einem der Ansprüche 1 bis 18,
**gekennzeichnet durch**
- ein Metallelement (11) als Gleitfläche auf der Innenseite (19) des Dichtrings (3),
- wenigstens einen im Metallelement (11) eingelassenen Sensor (31) zur Erfassung des ohmschen Widerstandes am Dichtring (3).

20. Dichtungssystem nach einem der Ansprüche 1 bis 19,
**gekennzeichnet durch**
Standard-Dichtmittelzuführungen (28) zur Zuführung von Dichtmittel (6) zwischen Dichtring (3) und Welle (1).

21. Dichtungssystem nach Anspruch 20,
**gekennzeichnet durch**
eine Anzahl von zusätzlichen Dichtmittelzuführungen (32).

22. Dichtungssystem nach Anspruch 21,
**dadurch gekennzeichnet, dass**
die zusätzlichen Dichtmittelzuführungen (32) am Dichtring (3) unsymmetrisch angeordnet sind.

23. Dichtungssystem nach einem der Ansprüche 20 bis 22,
**gekennzeichnet durch**
ein Reglersystem zur Regelung der Dichtmittelzufuhr.

24. Dichtungssystem nach Anspruch 23,
**dadurch gekennzeichnet, dass**
das Reglersystem einen Reglerbaustein (36) aufweist, der über entsprechende Stellorgane die Dichtmittelzufuhr betätigt.

25. Dichtungssystem nach Anspruch 23 oder 24,
**dadurch gekennzeichnet, dass**
das Reglersystem eine Auswerte- und Steuereinheit zur Auswertung der Messwerte der Sensoren und zur Ansteuerung des Reglerbausteins (36) aufweist.

26. Verfahren zum Betrieb eines Dichtungssystems nach einem der Ansprüche 1 bis 25, mit den Schritten
- Erfassen von Messgrößen, die Rückschlüsse auf die Dichtigkeit des Dichtungssystems ermöglichen,
- Auswerten der Messgrößen und
- Überwachen des Dichtungssystems.

27. Verfahren nach Anspruch 26, **gekennzeichnet durch**
das Erfassen von auf das Verdrehelement (12) und/oder die Aufnahmeausnehmung (13) wirkenden Kräften.

28. Verfahren nach Anspruch 26 oder 27, **gekennzeichnet durch**
das Erfassen des radialen Abstandes zwischen Welle (1) und Dichtring (3).

29. Verfahren nach einem der Ansprüche 26 bis 28, **gekennzeichnet durch**
das Erfassen des Isolationswiderstandes des Dichtmittels (6).

30. Verfahren nach einem der Ansprüche 26 bis 29, **gekennzeichnet durch**
das Erfassen des kapazitiven Widerstandes des Dichtmittels (6).

31. Verfahren nach einem der Ansprüche 26 bis 30, **gekennzeichnet durch**
das Erfassen der Position des Dichtringes (3) in radialer und/oder axialer Richtung zum Dichtringhalter (5).

32. Verfahren nach einem der Ansprüche 26 bis 31, **ge kennzeichnet durch** das Erfassen von Schwingungen des Dichtringes (3).

33. Verfahren nach einem der Ansprüche 26 bis 32, **gekennzeichnet durch**
das Erfassen von Relativbewegungen zwischen Dichtringhalter (5) und Welle (1).

34. Verfahren nach einem der Ansprüche 26 bis 33,
**gekennzeichnet durch**
das Erfassen von Druckschwankungen im Dichtmittelzulauf (28, 32).

35. Verfahren nach einem der Ansprüche 26 bis 34,
**gekennzeichnet durch**
das Erfassen der Temperatur an der Dichtringinnenseite (19).

36. Verfahren nach einem der Ansprüche 26 bis 35, **gekennzeichnet durch**
das Speichern und/oder Auswerten der Messgrößen.

37. Verfahren nach einem der Ansprüche 26 bis 36, **gekennzeichnet durch**
regelungstechnisches Eingreifen in das Dichtungssystem, um Störungen während des Betriebs zu vermeiden.

38. Verfahren nach Anspruch 37, **gekennzeichnet durch**
Regeln der Dichtmittelzufuhr in Abhängigkeit von den Messgrößen.
